# EUROPEAN PATENT APPLICATION

(11) **EP 2 604 454 A1**
(43) Date of publication of application: **19.06.2013**
(21) Application number: 11382383.5
(22) Date of filing: 16.12.2011
(51) Int. Cl.: B60G 21/055

(54) **Variable length vehicle stabiliser and vehicle with the variable length stabiliser**

(71) Applicant: Edai Technical Unit, A.I.E., 48340 Amorebieta Vizcaya (ES)
(72) Inventor: Teijeiro Castro, Rafael, 48340 Amorebieta (Vizcaya) (ES); Seras Escolano, Ivan, 48340 Amorebieta (Vizcaya) (ES)
(74) Representative: Carpintero Lopez, Francisco

(57) **Abstract**

The stabiliser comprises a telescopic assembly (1) with an outer member (10) and an inner member (20) axially movable with respect to the outer member, without the possibility of rotating. A threaded element (30) is coupled to the outer member (10) and to the inner member (20) such that when said threaded element (30) rotates an axial movement of said inner member (20) with respect to said outer member (10) occurs, varying the length between kinematic centres of the stabiliser.

## Description

### Technical Field of the Inventi n

The invention is comprised in the field of automotive vehicle stabilisers, and more precisely in the field of variable length stabilisers.

### Background of the Invention

The stabiliser is a part linking the stabiliser bar with the suspension of a wheel. Stabilisers belong to the kinematic chain usually formed by the stabiliser bar, stabiliser, suspension and vehicle chassis. The stabiliser is the element responsible for transmitting the stresses generated by the stabiliser bar to the suspension of a wheel, and vice versa, generating in the vehicle chassis a moment opposite the roll moment of the vehicle, achieving greater lateral rigidity of the vehicle.

When the vehicle enters a curve, a centrifugal force is generated causing the body to tilt towards the outside of said curve, causing a roll moment. At the same time, the stabiliser bar attached to the suspension of a wheel by means of the stabiliser experiences torsion causing a moment opposite the roll moment of the vehicle. This moment opposite the roll moment is constant for passive systems with passive (fixed length) stabilisers, but there are active variable length stabilisers with which this moment can be controlled.

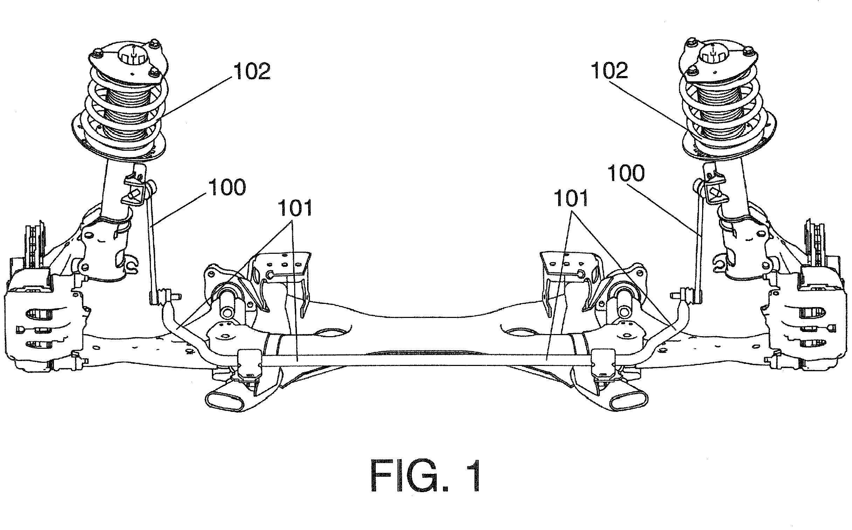

Figure 1 schematically shows a conventional assembly, with the stabiliser bar 101 attached to the dampers 102 with respective passive, i.e., fixed length, stabilisers 100.

US-A-2006/0113734 describes an example of a variable length stabiliser with a motor coupled at the end of a threaded rod. However, this configuration implies that a rotational force is transmitted to the means or devices for connecting or coupling the stabiliser to the rest of the vehicle (these means or devices are usually ball joints or the like), which can give rise to damage or wear. On the other hand, the impact loads experienced by the mechanism directly affect the motor, which can also cause damage.

On the other hand, the motor is directly connected to the threaded rod, without reduction, so a relatively powerful motor is necessary, which can imply a fairly high energy consumption, larger volume, heavier weight and higher cost.

On the other hand, given the position of the motor at one end of the threaded rod, the length of the assembly can be greater than that desired, since the motor is in series with the stabiliser itself.

On the other hand, in the unit which moves along the threaded rod there is an intermediate element which absorbs part of the rotation of the threaded rod and makes control more difficult.

US-A-5186486 describes another example of a variable length stabiliser based on a rack and pinion mechanism, which in principle can be advantageous for preventing the rotational force of the motor from being transmitted in the form of torque to the coupling means for coupling the stabiliser to the vehicle arranged at the two ends of the stabiliser. The rack bar, associated with one of the coupling means, is allowed to move inside a casing associated with the other coupling means. However, the arrangement of the rack bar inside the casing implies a certain risk of misalignment between the components. Furthermore, although the rack and pinion system has its advantages, it implies limited reduction which can require an additional reduction phase or the use of a more powerful motor, which in turn implies drawbacks in terms of the volume and weight of the mechanism, and in terms of the cost.

DE-A-10 2005 028 327 reflects a completely hydraulic stabiliser.

KR-A-10-2009-0098039 reflects an alternative solution in which instead of modifying the length of the stabilisers, the point of support thereof is modified, i.e., the stabilisers themselves are fixed length stabilisers. A mechanism based on a motor with a worm screw acting on a rack and pinion assembly is used.

### Description of the Intention

The invention relates to a stabiliser which changes the length between kinematic centres by means of actuating a motor. This allows controlling the torque transmitted by the stabiliser bar, being able to make it more or less rigid depending on the type of drive desired.

A first aspect of the invention relates to a vehicle stabiliser (and more specifically for linking the stabiliser bar to the suspension of a wheel or the like), comprising a telescopic assembly with a longitudinal axis comprising an outer member and an inner member arranged at least partially inside the outer member and axially movable with respect to the outer member according to said longitudinal axis, without the possibility of rotating. The stabiliser comprises first coupling means (for example, a ball joint or the like) for coupling the stabiliser to a part of the vehicle, and second coupling means for coupling the stabiliser to another part of the vehicle as is conventional. The first coupling means are attached to the outer member and the second coupling means are attached to the inner member, such that the relative axial position of said inner member with respect to said outer member determines the distance between said first coupling means and said second coupling means.

The stabiliser additionally comprises a threaded element (which in some embodiments of the invention can have at least in part of its extension a threaded rod or screw configuration) extending according to said longitudinal axis, said threaded element being coupled to said outer member and to said inner member such that when said threaded element is rotated, the threaded element causes an axial movement of said inner member with respect to said outer member according to said longitudinal axis.

Thus, this basic configuration not only prevents the actuation of the stabiliser from transmitting a torque to the coupling means of the stabiliser (since there is no possibility of rotation between the inner member and the outer member), but it further achieves greater reduction than that provided by conventional solutions based on rack and pinion assemblies. The result is a device which can be of a relatively small size and can use a motor of an also relatively small size and relatively lower consumption. It further assures alignment between the outer and inner members of the telescopic assembly, i.e., good stability of the assembly is achieved.

The threaded element can be rotationally assembled in the outer member, and the inner member can be coupled to said threaded element such that the rotation of said threaded element causes the axial movement of the inner member according to said longitudinal axis. For example, the outer member can comprise or contain bearings (for example, located in a larger-diameter area of the outer member, for example, in an area far from the end the outer member through which the inner member enters), and the threaded element can be rotationally assembled by means of said bearings. The threaded element can thus have an axially fixed position with respect to the outer member and its rotation can therefore move the inner member with respect to the outer member.

In some embodiments of the invention, the threaded element can comprise a first end and a second end, and the threaded element can be coupled to the inner member in an area closer to the second end than to the first end, and on the other hand assembled with respect to the outer member, for example, through the bearings, in an area closer to the first end than to the second end.

The stabiliser can additionally comprise a motor (for example, a pneumatic, hydraulic or electric motor) configured to rotate the threaded element. The motor can be located between the first and second coupling means, for example, between said first end and said second end, i.e., the motor can be located next to the longitudinal axis of the stabiliser, for example, next to the threaded element, whereby the motor does not imply an undesirable extension of the stabiliser in its longitudinal direction, unlike what occurs in, for example, the solution proposed in US-A-2006/0113734), in which the motor is in series with the rest of the part. The motor can have any orientation, for example, parallel or perpendicular with respect to the longitudinal axis, or it can be at any angle with respect to said axis. The motor can also be coaxial with the threaded element, i.e., arranged after the threaded element, in series with the threaded element, and mesh directly with said threaded element.

In some embodiments of the invention the stabiliser can additionally comprise a threaded rod or the like coupled to the motor, the threaded rod extending in a direction perpendicular to the longitudinal axis, said threaded rod meshing with a toothed part of the threaded element, such that the motor can rotate the threaded element through said threaded rod. In alternative embodiments of the invention, instead of a threaded rod there can be another type of meshing means for meshing between the motor and the threaded element, as long as they are suitable for interconnecting the motor and the threaded element, preferably with at least one reduction stage.

The threaded element can have a smaller-diameter part and a larger-diameter part, and the inner member can be coupled to the threaded element in correspondence with said smaller-diameter part (which can aid in minimizing they diameter of the assembly in that coupling area), while at the same time the threaded element can be coupled to the motor in correspondence with said larger-diameter part; allowing the motor to act on a larger-diameter area, for example, in the form of a disc, can serve to establish an additional reduction phase or stage, which can serve to reduce the need for power of the motor and therefore to allow using a smaller motor.

The inner member can have an outer configuration that is completely or partially complimentary to an inner configuration of the outer member, such that the inner member can axially move with respect to said outer member according to said longitudinal axis, without the possibility of rotating. For example, the inner member can have at least one groove on its outer surface extending in parallel with said longitudinal axis and in which at least one protrusion (for example, a key) arranged on the inner surface of the outer member fits, and/or the outer member can have at least one groove on its inner surface extending in parallel with said longitudinal axis and in which at least one protrusion (for example, a key) arranged on the outer surface of the inner member fits. For example, both surfaces can comprise ribbed areas that mutually fit together. The contact surface between the inner member and the outer member can be substantially circular with means preventing the relative rotation between both parts (such as keys, ribs, etc.), but other configurations preventing rotation are also possible, for example, polygonal, elliptical sections, etc.

The stabiliser can be assembled in a vehicle, for example, being or being part of the link between the stabiliser bar and suspension of one or more wheels.

Another aspect of the invention relates to a vehicle comprising, in correspondence with a link between the stabiliser bar and the suspension of at least one wheel, at least one stabiliser according to that described above. It is possible to install a single active stabiliser or two active stabilisers. The difference is that by introducing a second variable length active stabiliser, it is only necessary to modify the length of each one half as much to achieve the same effect compared to the case in which the effect must be achieved by modifying the length of a single stabiliser.

### Description of the Drawings

To complement the description and for the purpose of aiding to better understand the features of the invention according to a preferred practical embodiment thereof, a set of drawings is attached as an integral part of said description in which the following has been depicted with an illustrative and nonlimiting character:
Figure 1 schematically shows two fixed length stabilisers according to the state of the art, assembled in correspondence with the suspension of the vehicle.
Figure 2 shows a sectional view of a stabiliser according to a possible embodiment of the invention.
Figure 3 shows an elevational view of said stabiliser.
Figures 4 and 5 are cross-section views of the stabiliser according to sections A-A and B-B, respectively, in Figure 3.
Figure 6 is a perspective view of the stabiliser according to this embodiment of the invention.

### Preferred Embodiment of the invention

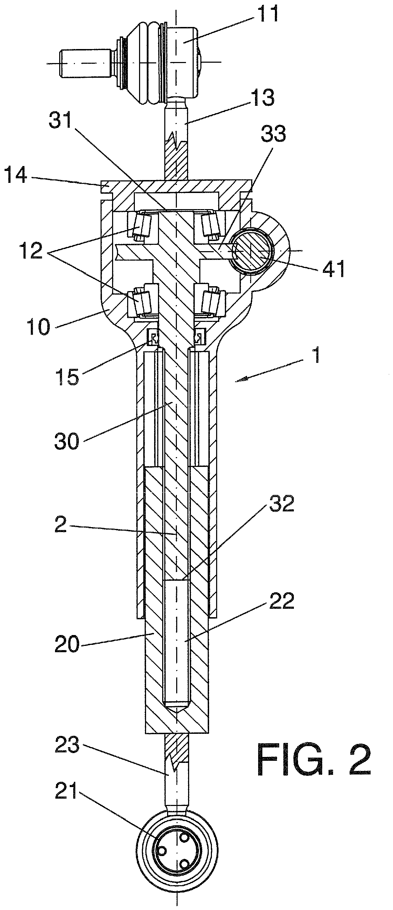

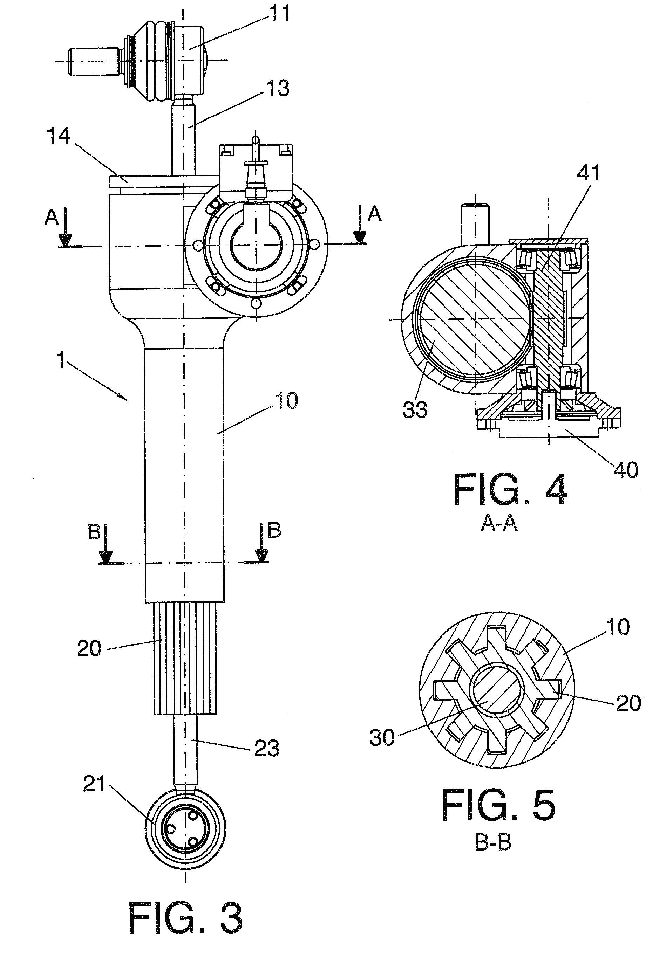

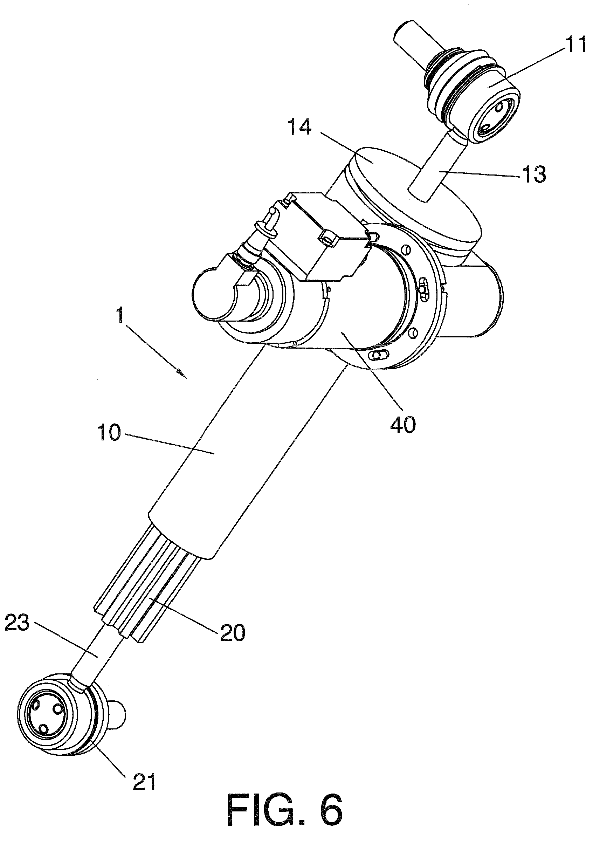

As can be observed in Figures 2-6, the variable length stabiliser of the invention comprises a telescopic assembly 1, with an outer member 10 and an inner member 20, the inner member 20 being axially movable with respect to the outer member 10, according to a longitudinal axis 2 of the stabiliser. In Figure 5 it can be seen how the inner surface of the outer member 10 has a ribbed configuration, with protrusions and recesses, complimentary to a surface with a ribbed configuration of the inner member 20 (the ribbed area of the inner member 20 is also seen in Figures 3 and 6), such that the axial movement along (or in parallel with) the longitudinal axis 2 is allowed, but not a relative rotation between the outer member 10 and the inner member 20. In other words, the two members 10 and 20 cannot rotate with respect to one another.

The outer member 10 is attached through a linkage rod 13 to a ball joint 11 serving to couple the stabiliser to one of its points for the connection to the rest of the vehicle. The inner member 20 is similarly attached through another linkage rod 23 to another ball joint 21, serving to couple the stabiliser to another one of its points for the connection to the rest of the vehicle. The relative axial position between the inner member 20 and the outer member 10 thus determines the distance between the points for the connection of the stabiliser with the stabiliser bar and the suspension of the vehicle. The stabiliser can obviously have other coupling means, for example, elastic couplings, instead of ball joints.

As can be observed in Figure 2, the stabiliser includes a threaded element 30 which has a threaded part meshing with a thread or the like in an inner hole 22 of the inner member 20. This threaded part extends in the axial direction (i.e., in parallel with the longitudinal axis 2). The threaded element 30 is assembled in the outer member 10 by means of bearings 12, such that the threaded element 30 can rotate about its longitudinal axis but cannot move axially with respect to the outer member 10. Thus, when the threaded element 30 rotates about its axis, the axial movement of the inner member 20 with respect to the outer member 10 occurs.

The stabiliser includes a motor 40 (for example, electric, hydraulic or pneumatic motor), which is coupled to the threaded element 30 by means of a threaded rod 41 or the like, meshing with a toothed part 33 of the threaded element 30, as can be seen in Figures 2 and 4. This toothed part 33 is located in correspondence with a larger-diameter part of the threaded element 30, i.e., in correspondence with a part where the diameter of the threaded element is greater than in the threaded part meshing with the inner member 20. The reduction between motor and threaded element can thus be optimised without having to increase the dimensions of the rest of the stabiliser.

The outer member 10 can be closed in its upper part (according to the orientation seen in Figure 2) by means of a cover 14, and it can have a gasket 15 separating the area in which the movement of the motor 40 is transmitted to the threaded element 30 and where bearings 12 are located (above said gasket 15 in Figure 2), from the area in which the inner member 20 is housed in the outer member 10 (under the gasket in Figure 2).

In this text the word "comprises" and its variants (such as "comprising", etc.) must not be interpreted in an excluding manner, i.e., they do not exclude the possibility that what is described can include other elements, steps, etc.

On the other hand, the invention is not limited to the specific embodiments which have been described but also covers, for example, the variants which can be carried out by the person having average skill in the art (for example, in terms of the choice of materials, dimensions, components, configuration, etc.), within what is deduced from the claims.

## Claims

1. Vehicle stabiliser comprising a telescopic assembly (1) with a longitudinal axis (2), the telescopic assembly comprising an outer member (10) and an inner member (20) arranged at least partially inside the outer member (10) and axially movable with respect to the outer member (10) according to said longitudinal axis (2), without the possibility of rotating, the stabiliser comprising first coupling means (11) for coupling the stabiliser to a part of the vehicle, and second coupling means (21) for coupling the stabiliser to another part of the vehicle, said first coupling means (11) being attached to the outer member (10) and said second coupling means (21) being attached to the inner member (20), such that the relative axial position of said inner member (20) with respect to said outer member (10) determines the distance between said first coupling means (11) and said second coupling means (21),
and wherein
the stabiliser additionally comprises a threaded element (30) extending according to said longitudinal axis (2), said threaded element (30) being coupled to said outer member (10) and to said inner member (20) such that when said threaded element (30) rotates, an axial movement of said inner member (20) with respect to said outer member (10) occurs, according to said longitudinal axis (2).

2. Stabiliser according to claim 1, wherein the threaded element (30) is rotationally assembled in the outer member (10), and wherein the inner member (20) is coupled to said threaded element (30) such that the rotation of said threaded element (30) produces the axial movement of the inner member (20), according to said longitudinal axis (2).

3. Stabiliser according to claim 2, wherein the outer member (10) comprises bearings (12), the threaded element (30) being rotationally assembled by means of said bearings (12).

4. Stabiliser according to any of claims 2 and 3, wherein the threaded element comprises a first end (31) and a second end (32), the threaded element (30) being coupled to the inner member (20) in an area closer to the second end (32) than to the first end (31), and the threaded element (30) being assembled with respect to the outer member (10) in an area closer to the first end (31) than to the second end (32).

5. Stabiliser according to any of the preceding claims, additionally comprising a motor (40) configured to rotate the threaded element (30).

6. Stabiliser according to claim 4, additionally comprising a motor (40) configured to rotate the threaded element (30), the motor being located between the first coupling means (11) and the second coupling means (21),

7. Stabiliser according to claim 6, the motor being located between said first end (31) and said second end (32).

8. Stabiliser according to any of claims 5-7, additionally comprising a threaded rod (41) coupled to the motor (40), the threaded rod (41) extending in a direction perpendicular to said longitudinal axis (2), said threaded rod (41) meshing with a toothed part (33) of the threaded element (30) such that the motor can rotate the threaded element (30) through said threaded rod (41).

9. Stabiliser according to any of claims 5-8, wherein the threaded element (30) has a smaller-diameter part and larger diameter part, the inner member (20) being coupled to the threaded element (30) in correspondence with said smaller-diameter part, and the motor being (40) coupled to the threaded element in correspondence with said larger diameter part.

10. Stabiliser according to any of the preceding claims, wherein the inner member (20) has an outer configuration complimentary to an inner configuration of the outer member (10), such that the inner member (20) can axially move with respect to said outer member (10), according to said longitudinal axis (2), without the possibility of rotating.

11. Stabiliser according to claim 10, wherein the inner member (20) has at least one groove on its outer surface extending in parallel with said longitudinal axis (2) and in which at least one protrusion arranged on the inner surface of the outer member (10) fits.

12. Stabiliser according to claim 10 or 11, wherein the outer member (10) has at least one groove on its inner surface extending in parallel with said longitudinal axis (2) and in which at least one protrusion arranged on the outer surface of the inner member (20) fits.

13. Stabiliser according to any of the preceding claims assembled in a vehicle.

14. Vehicle comprising, in correspondence with a link between the stabiliser bar and the suspension of at least one wheel, at least one stabiliser according to any of the preceding claims.
